(19) Europäisches Patentamt
European Patent Office
Office européen des brevets

(11) Veröffentlichungsnummer: **0 367 105 B1**

(12) **EUROPÄISCHE PATENTSCHRIFT**

(45) Veröffentlichungstag der Patentschrift: **21.07.93**

(51) Int. Cl.[5]: **C08G 77/48**, C08G 77/26, C08G 77/54

(21) Anmeldenummer: **89119893.9**

(22) Anmeldetag: **26.10.89**

(54) **Organosiloxanamin-Copolykondensate, Verfahren zu ihrer Herstellung und Verwendung (II).**

(30) Priorität: **04.11.88 DE 3837416**

(43) Veröffentlichungstag der Anmeldung:
**09.05.90 Patentblatt 90/19**

(45) Bekanntmachung des Hinweises auf die Patenterteilung:
**21.07.93 Patentblatt 93/29**

(84) Benannte Vertragsstaaten:
**AT BE CH DE FR GB IT LI NL**

(56) Entgegenhaltungen:
**EP-A- 0 282 737**
**EP-A- 0 327 795**
**DE-A- 3 029 599**
**FR-A- 2 413 416**

(73) Patentinhaber: **Degussa Aktiengesellschaft**
**Weissfrauenstrasse 9**
**W-6000 Frankturt am Main 1(DE)**

(72) Erfinder: **Panster, Peter, Dr.**
**Im Lochseif 8**
**W-6458 Rodenbach(DE)**
Erfinder: **Grethe, Horst**
**Vor der Pulvermühle 3 a**
**W-6450 Hanau 11(DE)**
Erfinder: **Kleinschmit, Peter, Dr.**
**Wildaustrasse 19**
**W-6450 Hanau 9(DE)**

EP 0 367 105 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind Copolykondensate eines tertiären Organosiloxanamins mit einer oder mehreren weiteren Siloxankomponenten. Weiterhin werden Verfahren zur Herstellung und Verwendung dieser neuen Produkte beschrieben. Die Copolykondensate können bei gleicher chemischer Zusammensetzung in verschiedenen Formen, z.B. als sog. Block-Copolymere, statistische Copolymere oder sog. gemischte Copolymere vorliegen. Die neuen Produkte sind unlöslich in Wasser und organischen Lösungsmitteln und eignen sich besonders als Träger von Wirkstoffen, als Ionenaustauscher, als Metalladsorber und als Adsorber für organische Moleküle.

Bereits bekannt sind gemäß der deutschen Patentschrift 31 20 214 unlösliche Organosiloxanamine, die sich durch besonders gute chemische und physikalische Eigenschaften insbesondere im Vergleich zu analogen Systemen auf Basis organischer Polymerer oder auch speziell modifizierter anorganischer Polymersysteme auszeichnen. Diese Organosiloxanamine können als schwach basische Ionenaustauscher, als Adsorber, als Wirkstoffträger, als Träger heterogenisierter homogener Katalysatoren oder als heterogene Base in basenkatalysierten Reaktionen eingesetzt werden.

Die Matrix dieser Produkte läßt sich quasi maßgeschneidert herstellen, z. B. in bezug auf den gegebenenfalls für eine Verwendung als Katalysatorträger wichtigen Aspekt, daß die Dichte an funktionellen Gruppen durch den Einbau von Silicium-, Titan-, Zirkonium- und Aluminium-enthaltenden Vernetzern gesteuert werden kann. Diese Produkte lassen sich chemisch somit in vielfältiger Weise modifizieren, um den vielfältigen Anwendungen gerecht zu werden. Diese Modifizierung bezieht sich jedoch nur auf den Einbau chemisch nicht funktioneller Gruppierungen, denn diese Polymeren weisen als einzige Funktionalität eine sekundäre oder eine tertiäre Amingruppierung auf. Die Herstellung von Polymeren dieser Art in Kugelform wird in der (nicht vorveröffentlichten) EP-A - 0 327 795 beschrieben.

Es hat sich inzwischen jedoch bei verschiedenen Anwendungen dieser Polysiloxane als vorteilhaft erwiesen, unterschiedlich funktionelle Gruppen in einer Polymermatrix zu kombinieren. Durch diese Kombination lassen sich Effekte erzeugen, die über die Summe der Wirkungen der Einzelkomponenten hinausgehen (Synergismus), wobei gleichzeitig durch die verschiedenen Möglichkeiten der Anordnung der unterschiedlichen Funktionalitäten im Polymersystem, gegebenenfalls in Kombination mit Vernetzern, weitere Möglichkeiten eröffnet werden.

In der EP-A- 0 282 737 wird die recht aufwendige Herstellung von Acylthioharnstoffgruppen-haltiger Organopolysiloxane beschrieben, die durch Umsetzung der aus der DE-B- 31 20 214 bekannten Polymere z. B. mit einem Isothiocyanat umsetzt. Copolykondensate werden ebenfalls erwähnt.

Aufgrund der besonders vorteilhaften stofflichen Eigenschaften der aus der deutschen Patentschrift 31 20 214 bekannten tertiären Organosiloxanamine und des günstigen Polykondensationsverhaltens der entsprechenden Monomeren sollte es ein Ziel dieser Erfindung sein, Copolykondensate zu entwickeln, bei denen eine Komponente ein tertiäres Aminosiloxan ist, ohne daß sie Acylthioharnstoffgruppen enthalten.

Diese Aufgabe wurde dadurch gelöst, daß Organosiloxanamin-Copolykondensate entwickelt wurden, die dadurch gekennzeichnet sind, daß sie aus Einheiten der Formel

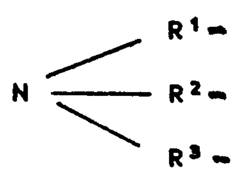

(I)

und aus Einheiten der Formel

$X - R^4 -$ (II)

bestehen, in welchen $R^1$ bis $R^4$ gleich oder verschieden sind und eine Gruppe der allgemeinen Formel

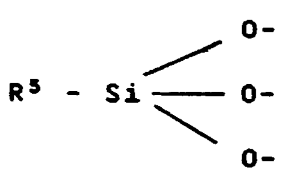

(III)

bedeuten, wobei $R^5$ an das Stickstoffatom bzw. den einbindigen Rest X gebunden ist und eine lineare oder verzweigte Alkylengruppe mit 1 bis 10 C-Atomen, eine Cycloalkylengruppe mit 5 bis 8 C-Atomen oder eine Einheit der allgemeinen Formel

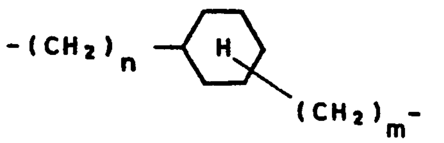 oder 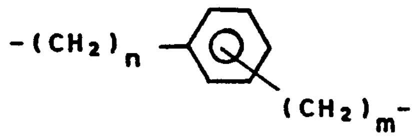

darstellt, in der n eine Zahl von 1 bis 6 ist und die Zahl stickstoffständiger bzw. X-ständiger Methylengruppen angibt und m eine Zahl von 0 bis 6 ist, wobei die freien Valenzen der an das Siliciumatom gebundenen Sauerstoffatome wie bei Kieselsäuregerüsten durch Siliciumatome weiterer Gruppen der Formel (III) und/oder über die Metallatome in einem oder mehreren vernetzenden Brückengliedern

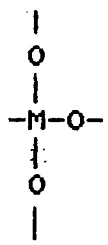 oder 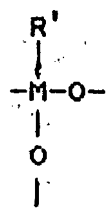 oder 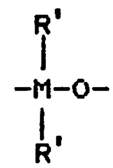 (IV)

bzw.

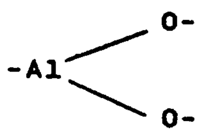 oder 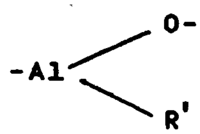

abgesättigt sind, wobei M ein Silicium-, Titan- oder Zirkoniumatom und R′ eine lineaire oder verzweigte Alkylgruppe mit 1 bis 5 C-Atomen ist und das Verhältnis der Siliciumatome aus den Gruppen der allgemeinen Formel (III) zu den Metallatomen in den Brückengliedern 1 : 0 bis 1 : 10 beträgt,
X in Formel (II) für

$-NH_2$, $-NH-(CH_2)_2-NH_2$,
$-NH-(CH_2)_2-NH-(CH_2)_2-NH_2$,
-Cl, -Br, -J, -SH, $-P(C_6H_5)_2$,

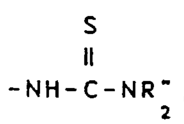, 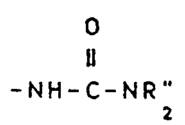,

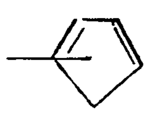

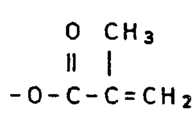

steht, wobei R″ gleich H oder eine lineaire oder verzweigte Alkylgruppe mit 1 bis 5 C-Atomen bedeutet.

Das Verhältnis der beiden Komponenten nach Formel (I) und Formel (II) liegt in den Grenzen von 0,01 : 99,99 Mol% bis 99,99 : 0,01 Mol%. Bevorzugte Zusammensetzungen enthalten jedoch mindestens 5 Mol%

Einheiten nach Formel (I) und höchstens 95 Mol% Einheiten nach Formel (II) und umgekehrt. Das in der Praxis zu wählende Verhältnis hängt in erster Linie von der vorgesehenen Verwendung des jeweiligen Copolykondensates und der hierfür erforderlichen chemischen und physikalischen Eigenschaften ab, so z. B. davon, ob eine hohe Dichte an funktionellen Gruppen nach Formel (II) gewünscht wird oder nicht. Dieser Aspekt kann z. B. bei der Verwendung als Katalysatorträger eine sehr wichtige Rolle spielen.

Dies trifft natürlich auch in bezug auf die Frage zu, in welcher Form diese Copolykondensate vorliegen, ob es sich um ein sog. statistisches Copolykondensat ("Random-Copolykondensat") oder um ein sog. Block-Copolykondensat oder um ein sog. gemischtes Copolykondensat handelt. Erfindungsgemäß können die neuen Copolykondensate in bezug auf die Einheiten nach Formeln (I), (II) und (IV) in jeder der drei genannten Formen vorliegen. Dies bedeutet, daß im Falle eines reinen statistischen Copolykondensates, das Einheiten nach Formel (I), (II) und (IV) enthält, eine rein statistische Verteilung der Komponenten vorliegt, entsprechend den molaren Verhältnissen der Ausgangsprodukte unter Berücksichtigung der im Fall der Einheiten (I) und (II) jeweils vorhandenen Siliciumgruppierungen nach Formel (III) und der Funktionalität der Vernetzergruppierung (IV).

Im Falle eines sog. Block-Copolykondensats liegt eine Bildung von Blöcken gleicher Einheiten nach Formel (I) und (II) und gegebenenfalls (IV) vor.

Schließlich weist ein sog. gemischtes Copolykondensat sowohl Strukturen eines statistischen Copolykondensats als auch eines Block-Copolykondensats auf. Dabei können die Einheiten nach Formel (I) oder Formel (II) oder Formel (IV) sowohl als statistisches als auch als Block-Copolykondensat vorliegen.

Die monomeren Bausteine der erfindungsgemäßen Copolykondensate sind prinzipiell bekannte Verbindungen, beispielsweise der Formeln

$N[(CH_2)_3Si(OH_3)_3]_3$
$H_2N-(CH_2)_3Si(OC_2H_5)_3$
$H_2N-(CH_2)_2-NH-(CH_2)_3Si(OCH_3)_3$
$(C_6H_5)_2P-CH_2-Si(OC_3H_7)_3$

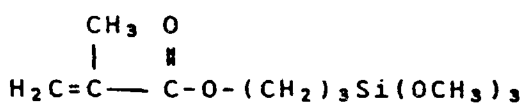

$(H_3C)_2Si(OC_2H_5)_2$

Die Zusammensetzung der daraus erhältlichen Polymereinheiten läßt sich durch die Formeln

$N[(CH_2)_3SiOH_{3/2}]_3$
$H_2N-(CH_2)_3SiO_{3/2}$
$H_2N-(CH_2)_2-NH-(CH_2)_3SiO_{3/2}$
$(C_6H_5)_2P-CH_2-SiO_{3/2}$

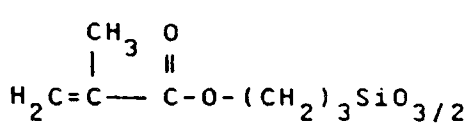

$(H_3C)_2SiO_{2/2}$

beschreiben.

Besondere Vorteile bezüglich der Verfügbarkeit der Ausgangsmaterialien und der stofflichen Eigenschaften werden mit Copolymeren erreicht, die aus Einheiten der Formeln (I) und (II) bestehen, in welchen $R^1$ bis $R^4$ für eine Gruppe der allgemeinen Formel

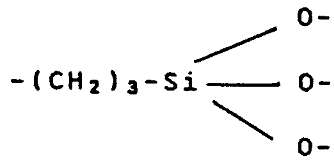

stehen.

Gegenstand der Erfindung sind auch Verfahren zur Herstellung der neuen Copolykondensate. Ein Verfahren, nach dem statistische Copolykondensate erhalten werden, sieht vor, daß man ein tertiäres Aminoorganosilan der allgemeinen Formel

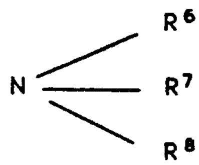 (V)

zusammen mit einem organofunktionellen Silan

$X - R^9$ (VI)

entsprechend der gewünschten stöchiometrischen Zusammensetzung des herzustellenden Copolykondensates, woei $R^6$ bis $R^9$ gleich oder verschieden sind und eine Gruppe der allgemeinen Formel

$R^5\text{-Si}(OR^{10})_3$ (VII)

bedeuten,
$R^5$ dieselbe Bedeutung wie in Formel (III) hat,
$R^{10}$ eine lineare oder verzweigte Alkylgruppe mit 1 bis 5 C-Atomen bedeutet und
X dieselbe Bedeutung wie in Formel (II) hat,
gegebenenfalls nach Zusatz eines oder mehrerer Vernetzer der allgemeinen Formel

$$M(OR)_{2-4}\, R'_{0-2} \quad \text{bzw.} \quad M(OR)_{2-3}\, R'_{0-1}$$

wobei M ein Silicium-, Titan-, Zirkon- oder Aluminiumatom,
R' eine lineare oder verzweigte Alkylgruppe mit 1 bis 5 C-Atomen oder eine Phenylgruppe ist und R eine lineare oder verzweigte Alkylgruppe mit 1 bis 5 C-Atomen bedeutet und das Verhältnis der Siliciumatome aus den Gruppen der allgemeinen Formel (VII) zu den Metallatomen in den Brückengliedern 1 : 0 bis 1 : 10 beträgt,
in einem weitgehend wassermischbaren, aber Aminoorganosilan nach Formel (V) und organofunktionelles Silan nach Formel (VI) sowie Vernetzer lösenden Lösungsmittel auflöst und der Lösung unter Rühren eine zumindest für die vollständige Hydrolyse und Kondensation ausreichende Menge Wasser zufügt, dann das Reaktionsgemisch unter Weiterrühren bei einer bestimmten Temperatur im Bereich von Raumtemperatur bis 200° C geliert, den sich bildenden Feststoff, gegebenenfalls nach Zusatz von weiterem Lösungsmittel oder Wasser noch bis zu 48 Stunden bei Raumtemperatur bis 200° C, bei Normaldruck oder einem Druck, welcher der Summe der Partialdrucke bei der jeweiligen Temperatur entspricht, rührt, dann das Copolykondensat nach gängigen Techniken von der flüssigen Phase abtrennt, gegebenenfalls wäscht, bei Raumtemperatur bis 250° C, gegebenenfalls unter Schutzgasatmosphäre oder im Vakuum trocknet, gegebenenfalls anschließend 1 bis 100 Stunden bei Temperaturen von 150 bis 300° C unter Schutzgasatmosphäre oder im Vakuum tempert, gegebenenfalls mahlt und oder klassifiziert.

Prinzipiell können als Ausgangsstoffe für das Verfahren anstelle der Alkoxysilylverbindungen auch die entsprechenden Halogenid- oder Phenoxyverbindungen eingesetzt werden, doch bietet deren Verwendung keine Vorteile, sondern kann, z. B. im Fall der Chloride, Schwierigkeiten durch die bei der Hydrolyse freiwerdende Salzsäure verursachen.

Die Hydrolyse der Ausgangsstoffe und gegebenenfalls Vernetzer muß in einem weitgehend wassermischbaren, aber die Ausgangsstoffe lösenden Lösungsmittel durchgeführt werden. Bevorzugt werden dabei Alkohole verwendet, die zu den Alkoxygruppierungen an den monomeren Vorstufen der Ausgangsstoffe bzw. an den Metallatomen der gegebenenfalls eingesetzten Vernetzer korrespondieren. Besonders geeignet ist Methanol, Ethanol, n- und i-Propanol, n- und i-Butanol oder n-Pentanol. Auch Gemische solcher Alkohole können als Lösungsmittel bei der Hydrolyse eingesetzt werden. Anstelle von Alkoholen können auch andere polare Lösungsmittel, die weitgehend wassermischbar sind, verwendet werden, doch erweist sich dies aus verfahrenstechnischen Gründen wegen der mit dem hydrolytisch abgespaltenen Alkohol zustandekommenden Lösungsmittelgemische als ungünstiger.

Bevorzugt führt man die Hydrolyse mit einem Überschuß an Wasser über die stöchiometrisch erforderliche Menge durch. Die zur Hydrolyse benötigte Menge Wasser hängt von der Hydrolysegeschwindigkeit der jeweils verwendeten Silane bzw. Vernetzer derart ab, daß mit zunehmender Menge Wasser raschere Hydrolyse erfolgt; allerdings kann eine Obergrenze durch auftretende Entmischung und Ausbildung eines Zweiphasensystems vorgegeben sein.

Grundsätzlich ist eine Hydrolyse in homogener Lösung vorzuziehen. Aufgrund der genannten beiden Aspekte wird in praxi gewichtsmäßig etwas weniger Wasser verwendet als gemeinhin die Gewichtssumme von Organosilan und Vernetzer ausmacht.

Die Polykondensation kann bei verschiedenen Temperaturen durchgeführt werden. Nachdem die Polykondensation bei höheren Temperaturen am schnellsten verläuft, ist es am einfachsten, diese bei Rückflußtemperatur oder knapp darunter erfolgen zu lassen. Prinzipiell kann dies jedoch bei noch höherer Temperatur, unter Druck, geschehen. Bei der Polykondensation kann das Reaktionsgemisch zu einer festen Masse erstarren. Aus diesem Grunde ist es angebracht, eine entsprechende Menge Lösungsmittel oder Wasser zur Verdünnung zuzusetzen.

Das Lösungsmittel wird dabei in der Regel dasselbe sein, das schon bei der Hydrolyse der Silane eingesetzt wurde, d. h. bevorzugt wird ein niederen Alkohol mit 1 bis 5 C-Atomen verwendet. Alternativ zu der Verdünnung mit einem Lösungsmittel kann natürlich auch mit Wasser verdünnt werden. Was im Einzelfall verwendet wird, hängt natürlich auch davon ab, welche physikalischen Eigenschaften das herzustellende Copolykondensat haben soll. Auch durch die Dauer und Temperatur der bis zu 48-stündigen Nachreaktion kann hierauf Einfluß genommen werden. In der Regel führt eine Nachreaktion bei höherer Temperatur zu einer Erhöhung der mechanischen Stabilität und gefestigten Struktur des gebildeten Produktes.

Die Abtrennung des gebildeten Feststoffs kann nach gängigen Techniken, wie Filtrieren, Dekantieren oder Zentrifugieren oder auch durch Abdestillieren der flüssigen Phase erfolgen. Die Waschung des gebildeten Feststoffs wird bevorzugt mit dem bei der Fällung verwendeten Lösungsmittel oder mit Wasser durchgeführt. Die Maßnahme der Temperung erweist sich im Hinblick auf eine Erhöhung der physikalischen Stabilität der Polykondensate oft als sinnvoll.

Das getrocknete bzw. getemperte Produkt kann in üblichen Vorrichtungen in verschiedene Korngrößenfraktionen klassifiziert werden. Von den Aufarbeitungsmaßnahmen Waschung, Trocknung, Temperung und Klassifizierung kann, je nach Umständen, die eine oder andere entfallen oder in einer anderen Reihenfolge durchgeführt werden. Eine Klassifizierung kann z. B. auch an flüssigkeitsfeuchtem, getrocknetem oder getempertem Produkt durchgeführt werden.

Die Dauer die Hydrolyse hängt von der Hydrolyseneigung von Ausgangsstoff und/oder Vernetzer und von der Temperatur ab. Die Hydrolysebereitschaft und damit -geschwindigkeit hängt insbesondere von der Art der Silicium- bzw. Titan-, Zirkonium- oder Aluminium-ständigen Alkoxygruppen ab, wobei die Methoxygruppe am schnellsten hydrolysiert und mit steigender Kettenlänge eine Verlangsamung eintritt. Hydrolyse und Polykondensation können daher durch Zusatz von Basen, wie Ammoniak, aber auch von üblichen Kondensationskatalysatoren, wie Dibutylzinndiacetat, beschleunigt werden.

Um ein unterschiedliches Hydrolyse- und Polykondensationsverhalten der monomeren Komponenten eines statistischen, gegebenenfalls vernetzten Copolykondensates auszugleichen, können nach einer erfindungsgemäßen Herstellungsvariante die monomeren Komponenten nach Formel (V) und (VI) und der oder die gegebenenfalls vorhandenen Vernetzer zunächst vorkondensiert werden. Hierzu wird das Aminosilan nach Formel (V), die Monomerkomponente nach Formel (VI) und der oder die Vernetzer 5 Minuten bis 72 Stunden ohne oder unter Verwendung eines der vorstehend genannten Lösungsmittel, bevorzugt unter Verwendung eines zu den Alkoxygruppen korrespondierenden Alkohols mit 1 bis 5 C-Atomen, in Gegenwart

von 1 bis 100, bevorzugt 1 bis 50 Mol% der zur vollständigen Hydrolyse stöchiometrisch erforderlichen Menge Wasser, bei Raumtemperatur bis 200° C vorkondensiert. Um diesen Vorkondensationseffekt zu begünstigen kann dabei, zusätzlich zu dem vorhandenen Aminoorganosilan, noch ein weiterer Kondensationskatalysator zugesetzt werden. Bevorzugt wird Ammoniak verwendet. Nach erfolgter Vorkondensation wird die vollständige Hydrolyse und Polykondensation wie schon beschrieben, durchgeführt.

Die vorstehend erwähnte "zur vollständigen Hydrolyse stöchiometrisch erforderliche Menge Wasser" kann bei der Vorkondensation durchaus mehr als 100 Mol% betragen. Da nämlich für vollständige Hydrolyse und einen zeitlich vernünftigen vollständigen Ablauf der Kondensationsreaktion, je nach Hydrolyseneigung der Monomeren und Temperatur, der Einsatz überstöchiometrischer Wassermengen angezeigt sein kann, bedeutet die Anwendung der genannten theoretischen Maximalkonzentration in bestimmten Fällen noch keineswegs, daß die Phase der Vorkondensation rasch durchlaufen bzw. übersprungen wird. In den meisten Fällen wird jedoch das Hydrolysemittel zur Vorkondensation in Mengen eingesetzt, die unterhalb der zu vollständiger Hydrolyse und Kondensation theoretisch notwendigen Mindestmenge liegt.

Nach einem anderen erfindungsgemäßen Verfahren werden sog. Block-Copolykondensate erhalten, bei denen eine Bildung von Blöcken gleicher Einheiten nach Formel (I) und (II) und gegebenenfalls einer oder mehrerer Einheiten nach Formel (IV) vorliegt. Dieses Verfahren sieht vor, ein tertiäres Aminoorganosilan der allgemeinen Formel (V) und ein organofunktionelles Silan der Formel (VI), wobei $R^6$ bis $R^9$ ebenso wie X den bereits genannten Bedeutungsumfang haben und gegebenenfalls eine oder mehrere Vernetzer der allgemeinen Formel

$$M(OR)_{2-4}\,R'_{0-2} \quad \text{bzw.} \quad M(OR)_{2-3}\,R'_{0-1}$$

wobei M, R und R' gleichfalls den bereits genannten Bedeutungsumfang haben, jeweils voneinander unabhängig, 5 Minuten bis 72 Stunden ohne oder unter Verwendung eines Lösungsmittels, in Gegenwart von 1 bis 100, bevorzugt 1 bis 50 Mol% der jeweils zur vollständigen Hydrolyse stöchiometrisch erforderlichen Menge Wasser, bei Raumtemperatur bis 200° C vorzukondensieren, dann die Vorkondensate zu vereinigen und dann nach Zusatz weiteren Wassers und gegebenenfalls weiteren Lösungsmittels, (so daß mindestens die für eine vollständige Hydrolyse und Polykondensation erforderliche Menge Wasser anwesend ist) die vollständige Hydrolyse und Polykondensation wie bereits beschrieben durchzuführen. Natürlich kann auch bei dieser Herstellungsvariante das gesamte Reaktionsgemisch nach dem Geliervorgang zu einer festen Masse erstarren. Dann ist es auch angebracht, eine entsprechende Menge weiteren Lösungsmittels oder Wassers zur Verdünnung zuzusetzen.

Die Vorkondensation kann durch den Zusatz einer geringen Menge eines bevorzugt basischen Kondensationskatalysators, wie z. B. Ammoniak, oder aber auch einer geeigneten Zinnverbindung beschleunigt werden. Die Menge Wasser, die zur Vorkondensation verwendet wird, hängt davon ab, welcher Oligomerisierungsgrad, d. h. welche Blockgröße erreicht werden soll. Bei Einsatz von mehr Wasser zur Vorkondensation entstehen natürlich größere Einheiten als bei Verwendung von weniger Wasser. Die Dauer der Vorkondensation hängt, wie bereits vorstehend erörtert, generell von der Hydrolysebereitschaft der monomeren Komponenten und der Temperatur ab.

Nach einem weiteren erfindungsgemäßen Verfahren werden sog. gemischte Copolykondensate erhalten, bei denen teilweise eine Bildung von Blöcken gleicher Einheiten nach Formel (I) und/oder Formel (II) und/oder einer oder mehrerer Einheiten nach Formel (IV) vorliegt, bei denen stets jedoch mindestens eine monomere Komponente nicht vorkondensiert und mindestens eine monomere Komponente vorkondensiert wird.

Dieses Verfahren sieht vor, daß man nur einen Teil der einzusetzenden Monomeren der Formeln (V), (VI) und (VIII) von Anspruch 5 (VIII sind vorgesehene Vernetzer der allgemeinen Formel

$$M(OR)_{2-4}\,R'_{0-2} \quad \text{bzw.} \quad M(OR)_{2-3}\,R'_{0-1}$$

wobei M, R und R' den bereits genannten Bedeutungsumfang haben) voneinander unabhängig 5 Minuten bis 72 Stunden ohne oder unter Verwendung eines Lösungsmittels (nach Anspruch 6), in Gegenwart von 1 bis 100 Mol% der zur vollständigen Hydrolyse stöchiometrisch erforderlichen Menge Wasser, bei Raumtemperatur bis 200° C, gegebenenfalls unter Zusatz eines Kondensationskatalysators, vorkondensiert, dann das(die) Vorkondensat(e) mit der(n) nicht kondensierten Komponente(n) vereinigt und dann zur Vervollständigung von Hydrolyse und Polykondensation der Gesamtmischung nach Zusatz weiteren Wassers und gegebenenfalls weiteren Lösungsmittels weiter wie nach Anspruch 5 verfährt. Die weitere Behandlung des dabei gebildeten Polykondensates gestaltet sich dann wie bei den anderen beschriebenen Verfahren.

Charakterisiert sind die neuen Organosiloxanamin-Copolykondensate insbesondere anhand der quantitativen Hydrolyseausbeuten, der Elementaranalysen und durch die Bestimmung der einzelnen Funktionalitäten.

Zwischen den nach den unterschiedlichen Herstellungsverfahren erhaltenen Copolykondensaten besteht rein optisch kein Unterschied. Je nach Vorbehandlung besitzen die erfindungsgemäßen Copolykondensate Oberflächen von 0,1 bis 1000 $m^2/g$ und Teilchengrößendurchmesser von ca. 1 cm bis 1$\mu$m. Ein bevorzugter Teilchengrößenbereich ist dabei ohne weiteres einstellbar.

Die Zersetzungspunkte für die Copolykondensate hängen natürlich von den gegebenen einzelnen Funktionalitäten ab. Generell liegen sie jedoch an der Luft bei deutlich über 100° C und unter Schutzgasatmosphäre bei über 150°C.

Neben der generellen Verwendbarkeit der Copolykondensate als Wirkstoffträger im breitesten Sinne besteht ein besonderer Gegenstand der Erfindung in der Verwendung von Copolykondensaten, in denen X für die komplexierenden Gruppen

$-NH_2$, $-NH-(CH_2)_2-NH_2$,
$-NH-(CH_2)_2-NH-(CH_2)_2-NH_2$, -SH, $-P(C_6H_5)_2$,

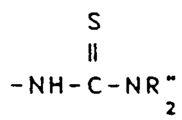

steht, wobei R" denselben Bedeutungsumfang wie in Anspruch 1 hat, zur Entfernung von gelösten Metallen aus einer flüssigen wäßrigen oder organischen Phase nach dem statischen oder dynamischen Prinzip.

Ein weiterer besonderer Gegenstand der Erfindung besteht in der Verwendung der Copolykondensate zur adsorptiven Bindung von gasförmigen organischen Verbindungen, vorzugsweise organischen Lösungsmitteln und von Wasserdampf.

Entscheidend für diese Fähigkeit zur Adsorption ist vor allem das spezifische Porenvolumen, der Porendurchmesser und die Oberflächeneigenschaften. Diese Faktoren können einerseits über die erfindungsgemäßen Herstellungs- und Nachbehandlungsverfahren und andererseits auch über die chemische Zusammensetzung, z. B. durch Einbau hydrophobierend wirkender Vernetzergruppen in das Polysiloxangerüst, beeinflußt werden. Die Rückgewinnung der adsorbierten organischen Verbindungen oder des Wassers ist durch Temperaturerhöhung und/oder durch Begasen mit erwärmter Luft ohne weiteres möglich.

Die Erfindung wird nachfolgend anhand von Ausführungsbeispielen weiter erläutert.

## Beispiel 1

44,3 g (0,20 Mol) $H_2N-(CH_2)_3Si(OC_2H_5)_3$ und 126,0 g (0,20 Mol) $N[(CH_2)_3Si(OC_2H_5)_3]_3$ wurden in 200 ml Ethanol gelöst. Die Lösung wurde auf Rückflußtemperatur aufgeheizt und unter Rühren mit 100 ml entsalztem Wasser versetzt. Die Lösung wurde 30 Min. weiter unter Rückfluß gerührt, dann auf 60° C abgekühlt und langsam gerührt, bis nach ca. 30 Min. die Gelierung einsetzte. 5 Min. nach dem Einsetzen der Gelierung wurde die Mischung mit 300 ml Wasser verdünnt, wieder auf Rückflußtemperatur aufgeheizt und weitere 2 Stunden bei dieser Temperatur gerührt. Dann wurde abgekühlt, der gebildete Feststoff abfiltriert und 2 mal mit je 300 ml Ethanol gewaschen. Nach 12-stündiger Trocknung bei 130° C und anschließender 12-stündiger Temperung bei 160° C unter $N_2$-Atmosphäre wurden 79,0 g (97,1 % der Theorie) polymeres Produkt, bestehend aus Polymereinheiten der Formel

$H_2N-(CH_2)_3-SiO_{3/2} \cdot N[(CH_2)_3SiO_{3/2}]_3$

erhalten.

| Analysen: | % C | % H | % N | % Si |
|---|---|---|---|---|
| Theorie: | 35,4 | 6,4 | 6,9 | 27,6 |
| Gefunden: | 34,7 | 6,3 | 6,6 | 27,0 |
| Spezifische Oberfläche: 531 $m^2/g$ | | | | |

Beispiel 2

Ausgehend von 22,2 g (0,1 Mol) $H_2N-(CH_2)_2-NH-(CH_2)_3Si(OCH_3)_3$ und 251,9 g (0,5 Mol) $N[(CH_2)_3Si-(OCH_3)_3]_3$ wurden analog zu Beispiel 1 und unter Verwendung von Methanol anstelle von Ethanol 158,0 g (96,6 % der Theorie) polymeres Produkt, bestehend aus Polymereinheiten der Formel

$0,2H_2N-(CH_2)_2-NH-(CH_2)_3SiO_{3/2} \bullet N[(CH_2)_3SiO_{3/2}]_3$

erhalten.

| Analysen: | % C | % H | % N | % Si |
|---|---|---|---|---|
| Theorie: | 36,7 | 6,3 | 6,0 | 27,5 |
| Gefunden: | 37,5 | 6,5 | 6,3 | 26,9 |
| Spezifische Oberfläche: 456 $m^2/g$ | | | | |

Beispiel 3

307,5 g (1,0 Mol) $H_2N-(CH_2)_2-NH-(CH_2)_2-NH-(CH_2)_3Si(OC_2H_5)_3$, 126,0 g (0,2 % Mol) $N[(CH_2)_3Si-(OC_2H_5)_3]_3$ und 625,0 g (3,0 Mol) $Si(OC_2H_5)_4$ wurden in einem 6 l Dreihalskolben mit Rückflußkühler und KPG-Rührer vereinigt. Nach Zugabe von 50 ml Wasser wurde zunächst 1 Stunde bei 80° C gerührt. Dann wurden 1 l Ethanol und weitere 400 ml Wasser zugesetzt und solange unter Rückfluß gerührt, bis die Gelierung einsetzte. Dem gelierenden Ansatz wurde 1 l Ethanol zur Verdünnung zugesetzt. Anschließend wurde die gesamte Reaktionsmischung in einen 10 l-Autoklaven überführt und 6 Stunden bei 150° C gerührt. Dann wurde abfiltriert, mit insgesamt 1 l Ethanol nachgewaschen und 24 Stunden bei 130° C unter $N_2$-Schutzgasatmosphäre getrocknet. Nach 2 Stunden Mahlung in einer Kugelmühle wurden 418,4 g (96,0 % der Theorie) feinteiliges polymeres Produkt, bestehend aus Polymereinheiten der Formel

$H_2N-(CH_2)_2-NH-(CH_2)_2-NH-(CH_2)_3SiO_{3/2} \bullet 0,2N[(CH_2)_3SiO_{3/2}]_3 \bullet 3SiO_2$

erhalten.

| Analysen: | % C | % H | % N | % Si |
|---|---|---|---|---|
| Theorie: | 24,2 | 5,0 | 10,3 | 29,6 |
| Gefunden: | 23,7 | 4,8 | 10,5 | 28,8 |
| Spezifische Oberfläche: 581 $m^2/g$ | | | | |

Beispiel 4

240,8 g (1,0 Mol) $Cl-(CH_2)_3Si(OC_2H_5)_3$ und 264,4 g (1,0 Mol) $Si(OC_3H_7)_4$ wurden zusammen mit 100 ml Isopropanol in einem 4 l-Dreihalskolben mit KPG-Rührer und Rückflußkühler vereinigt. Nach Zusatz von 15 ml $H_2O$ wurde auf Rückflußtemperatur aufgeheizt und zunächst 2 Stunden unter Rückfluß gerührt. Anschließend wurden 189,0 g (0,3 Mol) $N[(CH_2)_3Si(OC_2H_5)_3]_3$ und 148,3 g (1,0 Mol) $(CH_3)_2Si(OC_2H_5)_2$ sowie weitere 300 ml Isopropanol und 200ml Wasser zugesetzt und solange unter Rückfluß gerührt, bis die Gelierung einsetzte. Der Mischung wurden zur Verdünnung nochmals 500 ml Isopropanol zugesetzt. Nach

einer weiteren Rührdauer von 1 Stunde wurde abgekühlt, der gebildete Feststoff von der flüssigen Phase abzentrifugiert und 12 h bei 150° C unter Schutzgas getrocknet. Erhalten wurden 342,6 g (97,1 % der Theorie) polymeres Produkt, bestehend aus Polymereinheiten der Formel

$Cl\text{-}(CH_2)_3SiO_{3/2} \bullet 0{,}3N[(CH_2)_3SiO_{3/2}]_3 \bullet SiO_2 \bullet (CH_3)_2SiO_{2/2}$

erhalten.

| Analysen: | % C | % H | % N | % Cl | % Si |
|---|---|---|---|---|---|
| Theorie: | 26,2 | 5,0 | 1,2 | 10,0 | 31,0 |
| Gefunden: | 25,6 | 4,7 | 0,9 | 9,3 | 30,2 |
| Spezifische Oberfläche: 326 $m^2/g$ | | | | | |

Beispiel 5

100,8 g (0,2 Mol) $N[(CH_2)_3Si(OCH_3)_3]_3$ wurden in einem 250 ml Dreihalskolben mit KPG-Rührer und Rückflußkühler mit 5 ml Wasser versetzt und 1 Stunde bei 60° C gerührt. Parallel dazu wurden 39,9 g (0,2 Mol) des Mercaptofunktionellen Silans $HS\text{-}(CH_2)_3Si(OCH_3)_3$ ebenfalls in einem 100 ml Kolben mit 5 ml Wasser versetzt und gleichfalls 1 Stunde bei 60° C gerührt. Nach Ablauf dieser Zeit wurden die beiden Vorkondensate in insgesamt 200 ml Methanol gelöst, in einem 2 l-Dreihalskolben vereinigt, mit weiteren 50 ml Wasser versetzt und solange refluxiert, bis die Gelierung einsetzte. Die Suspension wurde mit 300 ml Wasser verdünnt, eine weitere Stunde unter Rückfluß gerührt und dann analog zu Beispiel 1 aufgearbeitet. Es wurden 82,0 g (96,0 % der Theorie) eines Block-Copolykondensates, bestehend aus Einheiten der Formel

$N[(CH_2)_3SiO_{3/2}]_3 \bullet HS\text{-}(CH_2)_3SiO_{3/2}$

erhalten.

| Analysen: | % C | % H | % N | % S | % Si |
|---|---|---|---|---|---|
| Theorie: | 33,7 | 5,9 | 3,3 | 8,3 | 26,3 |
| Gefunden: | 32,9 | 5,8 | 3,1 | 7,9 | 25,6 |
| Spezifische Oberfläche: 570 $m^2/g$ | | | | | |

Beispiel 6

Ausgehend von 69,7 g (0,20 Mol) $(C_6H_5)_2P\text{-}(CH_2)_3\text{-}Si(OCH_3)_3$ und 100,8 g (0,20 Mol) $N[(CH_2)_3Si(OCH_3)_3]_3$ wurden analog zu Beispiel 5 110,3 g (95,8 % der Theorie) eines Block-Copolykondensates, bestehend aus Einheiten der Formel

$N[(CH_2)_3SiO_{3/2}]_3 \bullet (C_6H_5)_2P\text{-}(CH_2)_3SiO_{3/2}$

erhalten.

| Analysen: | % C | % H | % N | % P | % Si |
|---|---|---|---|---|---|
| Theorie: | 50,1 | 6,0 | 2,4 | 5,4 | 19,5 |
| Gefunden: | 49,4 | 5,8 | 2,2 | 4,8 | 18,9 |
| Spezifische Oberfläche: 85 $m^2/g$ | | | | | |

Beispiel 7

71,4 g (0,1 Mol) $N[(CH_2)_8Si(OCH_3)_3]_3$, 29,8 g (0,1 Mol) $(H_3CO)_3Si-(CH_2)_3-NH-CS-N(C_2H_5)_2$ und 20,8 g (0,1 Mol) $Si(OC_2H_5)_4$ wurden in 100 ml Ethanol vereinigt. Die Mischung wurde mit 30 ml 1 %iger $NH_3$-Lösung versetzt, auf Rückflußtemperatur aufgeheizt und solange unter Rückfluß gerührt, bis die Gelierung einsetzte (ca. 3 Stunden). Nach Zusatz von weiteren 50 ml Ethanol wurde noch 3 Stunden unter Rückfluß gerührt, dann der gebildete Feststoff abfiltriert und 24 Stunden bei 130 °C unter $N_2$-Atmosphäre getrocknet.

Erhalten wurden 74,8 g (94,0 % der Theorie) polymeres Produkt, bestehend aus Polymereinheiten der Formel

$N[(CH_2)_8SiO_{3/2}]_3 \cdot (C_2H_5)_2N-CS-NH-(CH_2)_3SiO_{3/2} \cdot SiO_2$

erhalten.

| Analysen: | % C | % H | % N | % S | % Si |
|---|---|---|---|---|---|
| Theorie: | 48,3 | 8,2 | 5,3 | 4,0 | 17,6 |
| Gefunden: | 47,6 | 8,0 | 4,9 | 3,6 | 16,8 |

Beispiel 8

Ausgehend von 100,8 g (0,2 Mol) $N[(CH_2)_3Si(OCH_3)_3]_3$ und 44,5 g (0,2 Mol) $(H_3CO)_3Si-CH_2-NH-CO-N-(CH_3)_2$ wurden analog zu Beispiel 1 87,2 g (96,9 % der Theorie) polymeres Produkt, bestehend aus Polymereinheiten der Formel

$N[(CH_2)_3SiO_{3/2}]_3 \cdot (H_3C)_2N-CO-NH-CH_2-SiO_{3/2}$

erhalten.

| Analysen: | % C | % H | % N | % Si |
|---|---|---|---|---|
| Theorie: | 34,7 | 6,1 | 9,3 | 25,0 |
| Gefunden: | 34,1 | 5,7 | 8,8 | 24,8 |
| Spezifische Oberfläche: 356 $m^2/g$ | | | | |

Beispiel 9

142,8 g (0,2 Mol) $N[(CH_2)_5Si(OC_2H_5)_3]_3$, 54,1 g (0,2 Mol) $C_5H_5-(CH_2)_3-Si(OC_2H_5)_3$ -(Cyclopentadienylpropyltriethoxysilan) und 21,2 g (0,1 Mol) $(C_2H_5)Ti(OC_2H_5)_3$ wurden in einem 1 l Dreihalskolben vereinigt und nach Zusatz von 5 ml Wasser zunächst 3 Stunden bei 80 ° C vorkondensiert. Nach weiterer Verfahrensweise analog zu Beispiel 3 wurden 115,6 g (97,9 % der Theorie) polymeres Produkt, bestehend aus Polymereinheiten der Formel

$N[(CH_2)_5SiO_{3/2}]_2 \cdot C_5H_5-(CH_2)_3-SiO_{3/2} \cdot 0{,}5(C_2H_5)TiO_{3/2}$

erhalten.

| Analysen: | % C | % H | % N | % Si | % Ti |
|---|---|---|---|---|---|
| Theorie: | 28,5 | 4,0 | 2,4 | 19,0 | 4,1 |
| Gefunden: | 27,8 | 3,9 | 2,1 | 18,4 | 3,8 |

Beispiel 10

63,0 g (0,1 Mol) $N[(CH_2)_3Si(OC_2H_5)_3]_3$, 24,8 g (0,1 Mol)

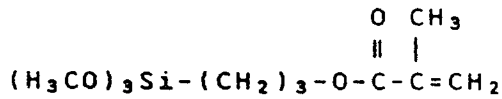

und 2,5 g (0,01 Mol) $Al(OC_4H_9)_3$ wurden analog zu Beispiel 9, mit 2 ml Wasser vorkondensiert, weiter umgesetzt und aufgearbeitet. Erhalten wurden 45,2 g (94,0 % der Theorie) polymeres Produkt, bestehend aus Einheiten der Formel

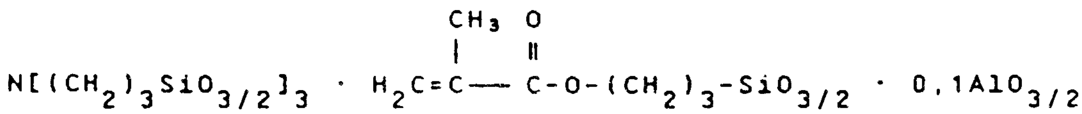

| Analysen: | % C | % H | % N | % Si | % Al |
|---|---|---|---|---|---|
| Theorie: | 40,0 | 6,1 | 2,9 | 23,4 | 0,6 |
| Gefunden: | 39,4 | 5,7 | 2,8 | 22,8 | 0,5 |
| Spezifische Oberfläche: 280 $m^2/g$ | | | | | |

Beispiel 11

64,4 g (0,1 Mol)

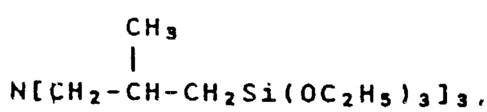

36,1 g (0,1 Mol)

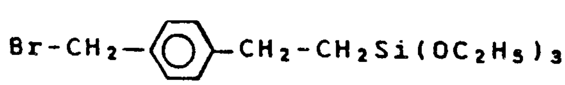

und 7,7 g (0,02 Mol) $Zr(OC_4H_9)_4$ wurden analog zu Beispiel 10 mit 2 ml Wasser vorkondensiert, weiter umgesetzt und aufgearbeitet. Erhalten wurden 59,0 g (96,2 % der Theorie) polymeres Produkt, bestehend aus Polymereinheiten der Formel

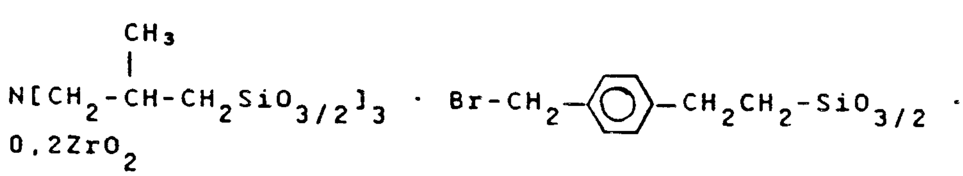

| Analysen: | % C | % H | % N | % Br | % Si | % Zr |
|---|---|---|---|---|---|---|
| Theorie: | 41,1 | 5,6 | 2,3 | 13,0 | 18,3 | 3,0 |
| Gefunden: | 40,6 | 5,4 | 2,0 | 12,7 | 17,8 | 2,8 |

Beispiel 12

64,8 g (0,1 Mol)

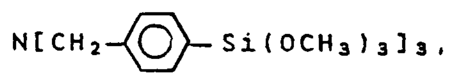

11,1 g (0,05 Mol) $H_2N-(CH_2)_3Si(OC_2H_5)_3$ und 8,2 g (0,05 Mol) $C_3H_7-Si(OCH_3)_3$ wurden analog zu Beispiel 10 mit 2 ml Wasser vorkondensiert, weiter umgesetzt und aufgearbeitet. Erhalten wurden 50,1 g (97,1 % der Theorie) polymeres Produkt, bestehend aus Polymereinheiten der Formel

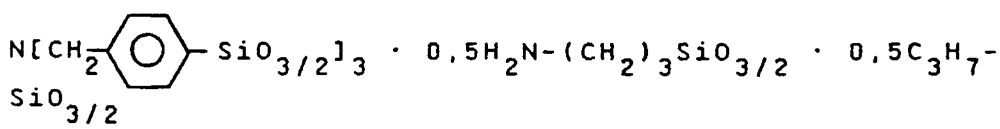

| Analysen: | % C | % H | % N | % Si |
|---|---|---|---|---|
| Theorie: | 55,9 | 5,0 | 4,1 | 21,8 |
| Gefunden: | 54,9 | 4,8 | 3,8 | 20,9 |

Beispiel 13

5 g des nach Beispiel 6 hergestellten $(H_5C_6)_2$P-funktionellen Polysiloxans wurden in 50 ml Wasser suspendiert, in denen 100 mg Rhodium gelöst waren. Die Suspension wurde 3 Stunden bei 80° C gerührt und anschließend der Feststoff abfiltriert. Eine Analyse des Filtrats ergab einen Rest-Rh-Gehalt von 0,7 ppm.

Beispiel 14

5 g des nach Beispiel 5 hergestellten Copolykondensates wurden in 50 ml Wasser suspendiert, in dem 30 mg Quecksilber gelöst waren. Die Suspension wurde 3 Stunden bei Raumtemperatur gerührt und dann der Feststoff abfiltriert. Eine Analyse des Filtrats ergab jetzt einen Quecksilber-Gehalt von 50 ppb.

Beispiel 15

5 g des nach Beispiel 7 hergestellten Copolykondensates wurden in 50 ml Ethanol suspendiert, in dem 50 mg Palladium gelöst waren. Die Suspension wurde 3 Stunden bei Rückflußtemperatur gerührt und dann der Feststoff abfiltriert. Eine Analyse des Filtrats ergab einen Rest-Pd-Gehalt von weniger als 1 ppm.

Beispiel 16

5 g des nach Beispiel 3 hergestellten Copolykondensates wurden in 50 ml Wasser suspendiert, in dem 100 mg Platin gelöst waren. Die Suspension wurde 2 Stunden bei Raumtemperatur gerührt und dann der Feststoff abfiltriert. Eine Analyse des Filtrats ergab einen Rest-Pt-Gehalt von weniger als 1 ppm.

Beispiel 17

5 g des nach Beispiel 4 hergestellten Copolykondensates wurden in einer Waschflasche vorgelegt. Die Waschflasche wurde in einem Wärmeschrank auf 20° C thermostatisiert und mit einem Luftstrom von 100 l/h beschickt, der mit einem Fünftel des Sättigungswertes an Trichlorethan beladen war. Durch regelmäßige Kontrolle der Gewichtszunahme des Polymers wurde die Trichlorethanaufnahme überwacht. Im Gleichgewichtszustand wurde eine Gewichtszunahme von rund 55 % festgestellt.

Beispiel 18

Ein analoger Versuch zu Beispiel 17 unter Einsatz des in Beispiel 2 hergestellten Copolykondensates und unter Verwendung von Toluol anstelle von Trichlorethan ergab eine Gewichtszunahme von 45 %.

Beispiel 19

Ein analoger Versuch zu Beispiel 17 unter Einsatz des in Beispiel 9 hergestellten Copolykondensates und unter Verwendung von n-Hexan anstelle von Trichlorethan ergab eine Gewichtszunahme von 32 %.

**Patentansprüche**

**1.** Organosiloxanamin-Copolykondensate, die aus Einheiten der Formel

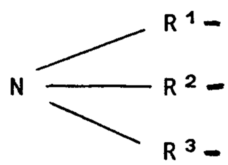

(I)

und aus Einheiten der Formel

$X - R^4 -$ (II)

bestehen, in welchen $R^1$ bis $R^4$ gleich oder verschieden sind und eine Gruppe der allgemeinen Formel

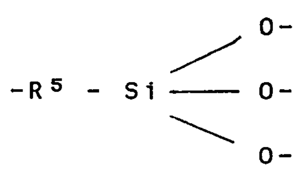

(III)

bedeuten, wobei $R^5$ direkt an das Stickstoffatom bzw. den einbindigen Rest X gebunden ist und eine lineare oder verzweigte Alkylengruppe mit 1 bis 10 C-Atomen, eine Cycloalkylengruppe mit 5 bis 8 C-Atomen oder eine Einheit der allgemeinen Formel

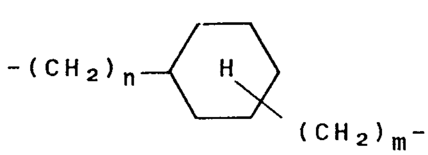

oder

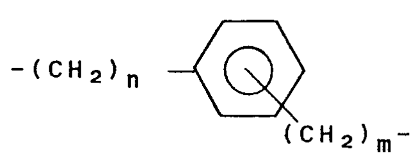

darstellt, in der n eine Zahl von 1 bis 6 ist und die Zahl stickstoffständiger bzw. X-ständiger Methylengruppen angibt und m eine Zahl von 0 bis 6 ist,
wobei die freien Valenzen der an das Siliciumatom gebundenen Sauerstoffatome wie bei Kieselsäuregerüsten durch Siliciumatome weiterer Gruppen der Formel (III) und/oder über die Metallatome in einem oder mehreren vernetzenden Brückengliedern der folgenden allgemeinen Formeln (IV)

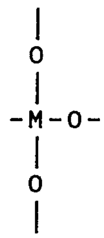 oder 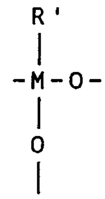 oder 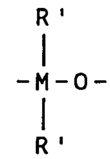 (IV)

bzw.

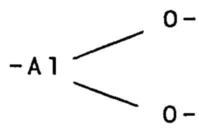 oder 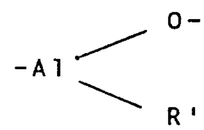

abgesättigt sind, M ein Silicium-, Titan- oder zirkoniumatom und R' eine lineare oder verzweigte Alkylgruppe mit 1 bis 5 C-Atomen oder eine Phenylgruppe ist und das Verhältnis der Siliciumatome aus den Gruppen der allgemeinen Formel (III) zu den Metallatomen in den Brückengliedern in den allgemeinen Formeln (IV) 1 : 0 bis 1 : 10 beträgt,
X in Formel (II) für

$-NH_2$, $-NH-(CH_2)_2-NH_2$,
$-NH-(CH_2)_2-NH-(CH_2)_2-NH_2$,
-Cl, -Br, -J, -SH, $-P(C_6H_5)_2$,

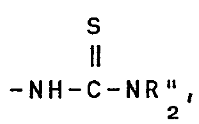 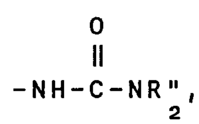

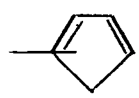 , 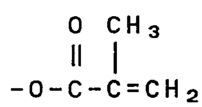

steht, wobei R" gleich H oder eine lineare oder verzweigte Alkylgruppe mit 1 bis 5 C-Atomen bedeutet, und in denen das Verhältnis von Einheiten nach Formel (I) zu Einheiten nach Formel (II) von 0,01 : 99,99 bis 99,99 : 0,01 Mol%, vorzugsweise 5 : 95 Mol% bis 95 : 5 Mol% beträgt.

**2.** Organosiloxanamin-Copolykondensate gemäß Anspruch 1,
**dadurch gekennzeichnet,**
daß sie als sogen. statistische Copolykondensate, Block-Copolykondensate oder als Gemische aus diesen Formen vorliegen.

**3.** Organosiloxanamin-Copolykondensate gemäß Ansprüchen 1 und 2,
**dadurch gekennzeichnet,**
daß $R^1$ bis $R^4$ für eine Gruppe der allgemeinen Formel

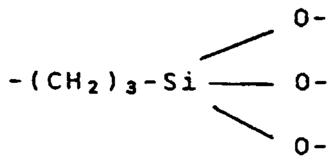

stehen.

4. Verfahren zur Herstellung von statistischen Organosiloxan-Copolykondensaten gemäß Ansprüchen 1 bis 3,
**dadurch gekennzeichnet,**
daß man ein tertiäres Aminoorganosilan der allgemeinen Formel

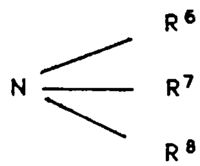 (V)

zusammen mit einem organofunktionellen Silan

$X - R^9$ (VI)

entsprechend der gewünschten stöchiometrischen Zusammensetzung des herzustellenden Copolykondensates, wobei $R^6$ bis $R^9$ gleich oder verschieden sind und eine Gruppe der allgemeinen Formel

$R^5\text{-Si}(OR^{10})_3$ (VII)

bedeuten,
$R^5$ dieselbe Bedeutung wie in Formel (III) hat,
$R^{10}$ eine lineare oder verzweigte Alkylgruppe mit 1 bis 5 C-Atomen bedeutet und
X dieselbe Bedeutung wie in Formel (II) hat, gegebenenfalls nach Zusatz eines oder mehrerer Vernetzer der allgemeinen Formel

$$M(OR)_{2-4}\ R'_{0-2}\ \text{bzw.}\ M(OR)_{2-3}\ R'_{0-1} \qquad \text{(VIII)}$$

wobei M ein Silicium-, Titan-, Zirkon- oder Aluminiumatom,
R' eine lineare oder verzweigte Alkylgruppe mit 1 bis 5 C-Atomen oder eine Phenylgruppe ist und R eine lineare oder verzweigte Alkylgruppe mit 1 bis 5 C-Atomen bedeutet und das Verhältnis der Siliciumatome aus den Gruppen der allgemeinen Formel (VII) zu den Metallatomen in den Brückengliedern 1 : 0 bis 1 : 10 beträgt,
in einem weitgehend wassermischbaren, aber Aminoorganosilan nach Formel (V) und organofunktionelles Silan nach Formel (VI) sowie Vernetzer lösenden Lösungsmittel auflöst und der Lösung unter Rühren eine zumindest für die vollständige Hydrolyse und Kondensation ausreichende Menge Wasser zufügt, dann das Reaktionsgemisch unter Weiterrühren bei einer bestimmten Temperatur im Bereich von Raumtemperatur bis 200° C geliert, den sich bildenden Feststoff, gegebenenfalls nach Zusatz von weiterem Lösungsmittel oder Wasser, noch bis zu 48 Stunden bei Raumtemperatur bis 200° C, bei Normaldruck oder einem Druck, welcher der Summe der Partialdrucke bei der jeweiligen Temperatur entspricht, rührt, dann das gebildete Copolykondensat nach gängigen Techniken von der flüssigen Phase abtrennt, gegebenenfalls wäscht, bei Raumtemperatur bis 250° C gegebenenfalls unter Schutzgasatmosphäre oder im Vakuum trocknet, gegebenenfalls anschließend 1 bis 100 Stunden bei Temperaturen von 150 bis 300° C unter Schutzgasatmosphäre oder im Vakuum tempert, gegebenenfalls mahlt und/oder klassifiziert.

**5.** Verfahren gemäß Anspruch 4,
**dadurch gekennzeichnet,**
daß als Lösungsmittel bei der Hydrolyse Methanol, Ethanol, n- und i-Propanol, n- und i-Butanol oder n-Pentanol, allein oder in Mischung, verwendet wird.

**6.** Verfahren nach Anspruch 4 oder 5,
**dadurch gekennzeichnet,**
daß man die Hydrolyse mit Wasserüberschuß durchführt.

**7.** Verfahren nach den Ansprüchen 4 bis 6,
**dadurch gekennzeichnet,**
daß man die monomeren Komponenten nach Formel (V) und (VI) und der oder die gegebenenfalls vorhandenen Vernetzer zusammen 5 Minuten bis 72 Stunden ohne oder unter Verwendung eines Lösungsmittels (nach Anspruch 5), in Gegenwart von 1 bis 100 Mol% der zur vollständigen Hydrolyse stöchiometrisch erforderlichen Menge Wasser, bei Raumtemperatur bis 200° C, gegebenenfalls unter Zusatz eines Kondensationskatalysators vorkondensiert und dann nach Zusatz weiteren Wassers und gegebenenfalls weiteren Lösungsmittels weiter wie nach Anspruch 4 verfährt.

**8.** Verfahren zur Herstellung von Block-Copolykondensaten gemäß den Ansprüchen 1 bis 3,
**dadurch gekennzeichnet,**
daß man die monomeren Komponenten nach Formel (V) und (VI) von Anspruch 4 und der oder die gegebenenfalls vorhandenen Vernetzer jeweils unabhängig voneinander 5 Minuten bis 72 Stunden ohne oder unter Verwendung eines Lösungsmittels nach Anspruch 5, in Gegenwart von 1 bis 100 Mol% der jeweils zur vollständigen Hydrolyse stöchiometrisch erforderlichen Menge Wasser, bei Raumtemperatur bis 200° C, gegebenenfalls unter Zusatz eines Kondensationskatalysators vorkondensiert, dann die Vorkondensate vereinigt und dann nach Zusatz weiteren Wassers und gegebenenfalls weiteren Lösungsmittels weiter wie nach Anspruch 4 verfährt.

**9.** Verfahren zur Herstellung von gemischten Copolykondensaten gemäß den Ansprüchen 1 bis 3,
**dadurch gekennzeichnet,**
daß man nur einen Teil der einzusetzenden Monomeren der Formeln (V), (VI) und (VIII), gegebenenfalls voneinander unabhängig 5 Minuten bis 72 Stunden ohne oder unter Verwendung eines Lösungsmittels (nach Anspruch 5), in Gegenwart von 1 bis 100 Mol% der zur vollständigen Hydrolyse stöchiometrisch erforderlichen Menge Wasser, bei Raumtemperatur bis 200° C, gegebenenfalls unter Zusatz eines Kondensationskatalysators, vorkondensiert, dann das (die) Vorkondensat(e) mit der(n) nicht vorkondensierten Komponente(n) vereinigt und dann nach Zusatz weiteren Wassers und gegebenenfalls weiteren Lösungsmittels weiter wie nach Anspruch 4 verfährt.

**10.** Verwendung der erfindungsgemäßen Copolykondensate gemäß Anspruch 1 bis 3, bei denen X für

$-NH_2$, $-NH-(CH_2)_2-NH_2$,
$-NH-(CH_2)_2-NH-(CH_2)_2-NH_2$, -SH, $-P(C_6H_5)_2$,

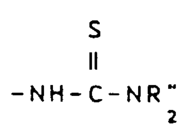

steht, wobei R" denselben Bedeutungsumfang wie in Anspruch 1 hat, zur Entfernung von gelösten Metallen aus wäßrigen oder organischen Lösungen.

**11.** Verwendung der erfindungsgemäßen Copolykondensate gemäß Anspruch 1 bis 3 zur Adsorption von gasförmigen organischen Verbindungen, vorzugsweise zur Adsorption von organischen Lösungsmitteln.

## Claims

**1.** Organosiloxanamine copolycondensates consisting of units of the formula

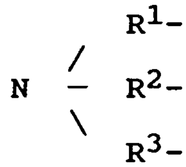 (I)

and units of the formula

$X - R^4 -$ (II)

in which $R^1$ to $R^4$ are identical or different and denote a group corresponding to the general formula

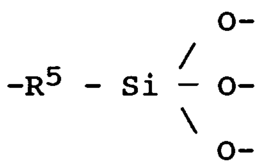 (III)

wherein $R^5$ is directly attached to the nitrogen atom or to the single bonded group X and denotes a straight chain or branched alkylene group having 1 to 10 carbon atoms, a cycloalkylene group having 5 to 8 carbon atoms or a unit of the general formula

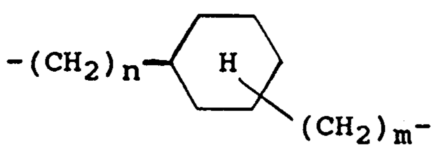 or 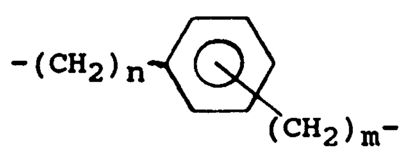

in which n stands for a number from 1 to 6
and indicates the number of methylene groups attached to nitrogen or to X and m is a number from 0 to 6,
the free valencies of the oxygen atoms attached to the silicon atom being saturated, as in silica structures, by silicon atoms of other groups of the formula (III) and/or via the metal atoms in one or more cross-linking bridging members corresponding to the following general formulae (IV)

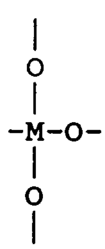 or 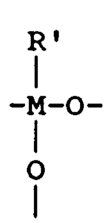 or 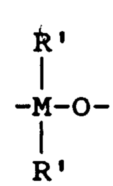 (IV)

or

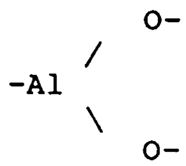 or 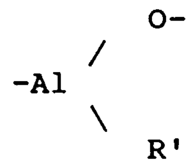 ,

M is a silicon, titanium or zirconium atom and R' is a straight chain or branched alkyl group having 1 to 5 carbon atoms or a phenyl group and the ratio of the silicon atoms in the groups of the general formula (III) to the metal atoms in the bridging members in the general formulae (IV) is from 1:0 to 1:10, X in formula (II) stands for

$-NH_2$, $-NH-(CH_2)_2-NH_2$,
$-NH-(CH_2)_2-NH-(CH_2)_2-NH_2$,
-Cl, -Br, -I, -SH, $-P(C_6H_5)_2$,

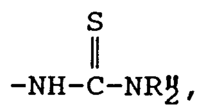, 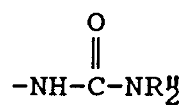 or

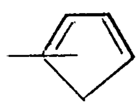, 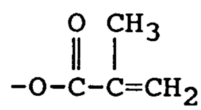

wherein R" stands for H or a straight chain or branched alkyl group having 1 to 5 carbon atoms and the ratio of units of formula (I) to units of formula (II) is from 0.01 : 99.99 to 99.99 : 0.01 mol-%, preferably from 5 : 95 mol-% to 95 : 5 mol-%.

2. Organosiloxanamine copolycondensates according to claim 1, characterised in that they exist as so called random copolycondensates, block copolycondensates or mixtures of these forms.

3. Organosiloxanamine copolycondensates according to Claims 1 and 2, characterised in that $R^1$ to $R^4$ stand for a group of the general formula

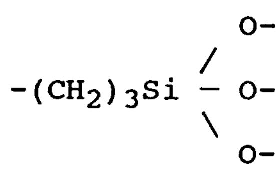 .

4. A process for the preparation of random organosiloxane copolycondensates according to Claims 1 to 3, characterised in that a tertiary amino-organosilane of the general formula

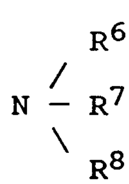 (V)

together with an organofunctional silane of the formula

$X - R^9$ (IV)

in proportions corresponding to the desired stoichiometric composition of the copolycondensate to be prepared,
wherein $R^6$ to $R^9$ are identical or different and denote a group of the general formula

$R^5$-$Si(OR^{10})_3$ (VII),

in which
$R^5$ has the same meaning as in formula (III),
$R^{10}$ denotes a straight chain or branched alkyl group having 1 to 5 carbon atoms and
X has the same meaning as in formula (II)
are dissolved in a solvent which is substantially water-miscible but dissolves aminoorganosilane corresponding to formula (V) and organofunctional silane corresponding to formula (VI) as well as cross-linking agents,
optionally after the addition of one or more cross-linking agents corresponding to the general formula

$M(OR)_{2-4}\ R'_{0-2}$ or $M(OR)_{2-3}\ R'_{0-1}$ (VIII)

wherein M is a silicon, titanium, zirconium or aluminium atom,
R' stands for a straight chain or branched alkyl group having 1 to 5 carbon atoms or a phenyl group and R denotes a straight chain or branched alkyl group having 1 to 5 carbon atoms and the ratio of silicon atoms from the groups of the general formula (VII) to the metal atoms in the bridging members is from 1 : 0 to 1 : 10,
and a quantity of water at least sufficient for complete hydrolysis and condensation is added to the solution with stirring, the reaction mixture is then gelled at a particular temperature in the range of from room temperature to 200 °C with further stirring, the solid which forms then continues to be stirred for up to 48 hours at a temperature from room temperature to 200 °C at normal pressure or a pressure equal to the sum of the partial pressures at the given temperature, optionally after the addition of a further quantity of solvent or water, and the copolycondensate thus formed is separated from the liquid phase by conventional techniques and optionally washed, dried at a temperature from room temperature to 250 °C, optionally under a protective gas atmosphere or in a vacuum, optionally heat-treated thereafter for 1 to 100 hours at temperatures from 150 to 300 °C under a protective gas atmosphere or in a vacuum and optionally ground and/or classified.

**5.** A process according to Claim 4, characterised in that the solvent used for hydrolysis is methanol, ethanol, n- and i-propanol, n- and i-butanol or n-pentanol, alone or as a mixture.

**6.** A process according to Claim 4 or 5, characterised in that hydrolysis is carried out with an excess of water.

**7.** A process according to Claims 4 to 6, characterised in that the monomeric components corresponding to formulae (V) and (VI) and the one or more than one cross-linking agent optionally present are together precondensed for 5 minutes to 72 hours at room temperature to 200 °C with or without the aid of a solvent (according to Claim 5) in the presence of from 1 to 100 mol-% of the quantity of water stoichiometrically required for complete hydrolysis, optionally with the addition of a condensation catalyst, and the process is then continued as in Claim 4 after the addition of a further quantity of water and optionally a further quantity of solvent.

**8.** A process for the preparation of block copolycondensates according to Claims 1 to 3, characterised in that the monomeric components corresponding to formulae (V) and (VI) of Claim 4 and the one or more than one cross-linking agent optionally present are precondensed independently of one another for 5 minutes to 72 hours at room temperature to 200 °C with or without the aid of a solvent according to Claim 5 in the presence of from 1 to 100 mol-% of the quantity of water stoichiometrically required for complete hydrolysis, optionally with the addition of a condensation catalyst, and the precondensates are then combined and the process is then continued as in Claim 4 after the addition of a further quantity of water and optionally a further quantity of solvent.

**9.** A process for the preparation of mixed copolycondensates according to Claims 1 to 3, characterised in that only part of the monomers of formulae (V), (VI) and (VIII) to be used are precondensed, optionally independently of one another, for 5 minutes to 72 hours at room temperature to 200 °C with or without the aid of a solvent (according to Claim 5) in the presence of from 1 to 100 mol-% of the quantity of water stoichiometrically required for complete hydrolysis, optionally with the addition of a condensation catalyst, and the precondensate(s) is or are then combined with the one or more than one component which has not been precondensed and the process is then continued as in Claim 4 after the addition of a further quantity of water and optionally a further quantity of solvent.

**10.** Use of the copolycondensates according to the invention as claimed in Claims 1 to 3 in which X stands for

$-NH_2$, $-NH-(CH_2)_2-NH_2$,
$-NH-(CH_2)_2-NH-(CH_2)_2-NH_2$, -SH, $-P(C_6H_5)_2$ or

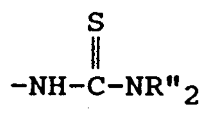

wherein R" has the same range of meanings as in Claim 1 for the removal of dissolved metals from aqueous or organic solutions.

**11.** Use of the copolycondensates according to the invention as claimed in Claims 1 to 3 for the adsorption of gaseous organic compounds, preferably for the adsorption of organic solvents.

**Revendications**

**1.** Copolycondensats organosiloxane-amine caractérisés en ce qu'ils sont constitués d'unités de formule :

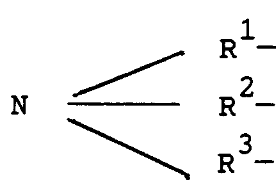

(I)

et d'unités de formule :

$X - R^4 -$ (II)

dans lesquelles les radicaux $R^1$ à $R^4$ sont identiques ou différents et représentent un groupe de formule générale :

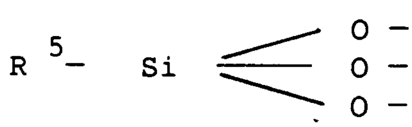

(III)

dans laquelle $R^5$ est directement lié à l'atome d'azote ou au reste X à une liaison, et représente un groupe alkylène linéaire ou ramifié de 1 à 10 atomes de C, un groupe cycloalkylène de 5 à 8 atomes de C ou une unité de formule générale :

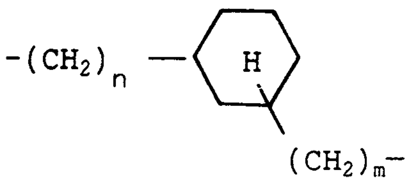

ou

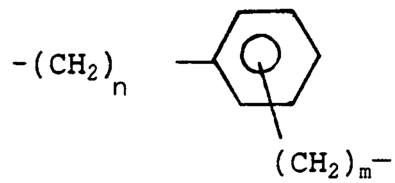

dans laquelle n est un nombre compris entre 1 et 6 et indique le nombre de groupes méthylène liés à l'azote ou à X, et m est un nombre compris entre 0 et 6, les valences libres des atomes d'oxygène liés à l'atome de silicium étant saturées comme dans le réseau de la silice par des atomes de silicium d'autres groupes de formule (III) et/ou par les atomes métalliques dans un ou plusieurs ponts de réticulation :

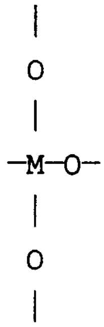

ou

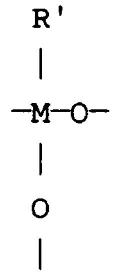

ou

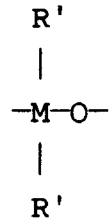

(IV)

ou

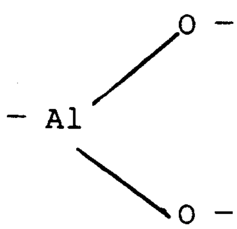

ou

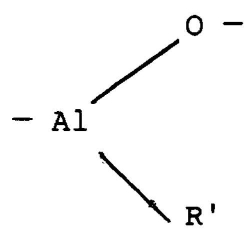

M étant un atome de silicium, de titane ou de zirconium et R' un groupe alkyle linéaire ou ramifié de 1 à 5 atomes de C et la proportion des atomes de silicium des groupes de formule générale (III) aux atomes métalliques dans les ponts des formules générales (IV) va de 1 : 0 à 1 : 10,
X dans la formule (II) représente :

$-NH_2$, $-NH-(CH_2)_2-NH_2$,

$$-NH-(CH_2)_2-NH-(CH_2)_2-NH_2,$$

-Cl, -Br, -3, -SH. $-P(C_6H_5)_2$,

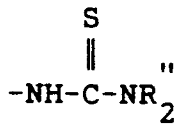 , 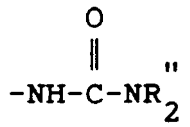 ,

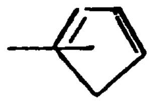 , 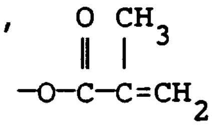

dans lesquelles R" représente un H ou un groupe alkyle linéaire ou ramifié de 1 à 5 atomes de C, et dans lesquels la proportion des unités de formule (I) aux unités de formule (II) va de 0,01 : 99,99 à 99,99 : 0,01 % molaire, de préférence de 5 : 95 à 95 : 5 % molaire.

**2.** Copolycondensats organosiloxane-amine selon la revendication 1, caractérisés en ce qu'ils se présentent sous forme de ce qu'on appelle des copolycondensats statistiques, des blocs copolycondensats ou des mélanges de ces formes.

**3.** Copolycondensats organosiloxane-amine selon les revendications 1 et 2, caractérisés en ce que les groupes $R^1$ à $R^4$ représentent un groupe de formule générale :

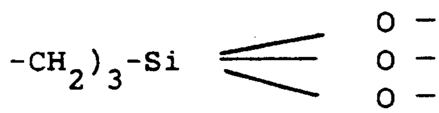

**4.** Procédé de fabrication de copolyconden-sats organosiloxane statistiques selon les revendications 1 à 3, caractérisé en ce qu'on dissout un aminoorganosilane tertiaire de formule générale :

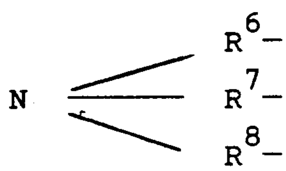 (V)

ainsi qu'un silane organofonctionnel

$X - R^9$ (VI)

selon la composition stoechiométrique souhaitée du copolycondensat à préparer, formules dans lesquelles, les groupes $R^6$ à $R^9$ sont identiques ou différents et représentent un groupe de formule générale :

$R^5\text{-Si}(OR^{10})_3$ (VII)

$R^5$ a la même signification que dans la formule (III),
$R^{10}$ représente un groupe alkyle linéaire ou ramifié de 1 à 5 atomes de C et,
X a la même signification que dans la formulation (II), le cas échéant après addition d'un ou plusieurs agents réticulants de formule générale :

$$M(OR)_{2-4}\ R'_{0-2} \quad \text{ou} \quad M(OR)_{2-3}\ R'_{0-1} \qquad (VIII)$$

dans laquelle M est un atome de silicium, de titane, de zirconium ou d'aluminium, R' est un groupe alkyle linéaire ou ramifié avec 1 à 5 atomes de c ou un groupe phényle et R est un groupe alkyle, linéaire ou ramifié avec de 1 à 5 atomes de C et la proportion d'atomes de silicium des groupes de formule générale (VII) aux atomes de métal dans les ponts est de 1 : 0 à 1 : 10, dans un solvant largement miscible à l'eau, mais dissolvant l'aminoorganosilane de formule (V) et le silaneorganofonctionnel de formule (VI) ainsi que l'agent réticulant, et on ajoute à la solution en agitant une quantité d'eau au moins suffisante pour réaliser l'hydrolyse et la condensation complète, ensuite on fait gélifier le mélange réactionnel en continuant d'agiter à une température déterminée dans l'intervalle compris entre la température ambiante et 200 °C, on mélange le solide qui se forme, le cas échéant après addition de solvant supplémentaire ou d'eau, pendant jusqu'à 48 heures à une température comprise entre la température ambiante et 200 °C, sous pression atmosphérique, ou sous une pression qui correspond à la somme des pressions partielles à chaque température, ensuite on sépare le polycondensat formé de la phase liquide par des techniques appropriées, on lave le cas échéant, on sèche à une température comprise entre la température ambiante et 250 °C, le cas échéant sous atmosphère protectrice de gaz ou sous vide, on traite ensuite le cas échéant pendant 1 à 100 heures à des températures comprises entre 150 et 300 °C, sous atmosphère protectrice de gaz ou sous vide, le cas échéant on broie et/ou on tamise.

**5.** Procédé selon la revendication 4, caractérisé en ce qu on utilise comme solvant lors de l'hydrolyse du méthanol, de l'éthanol, du n- et de l'i-propanol, du n- et de l'i-butanol ou du n-pentanol, seuls ou en mélange.

**6.** Procédé selon la revendication 4 ou 5, caractérisé en ce qu'on réalise l'hydrolyse avec un excès d'eau.

**7.** Procédé selon les revendications 4 à 6, caractérisé en ce qu'on précondense ensemble les composants monomères de formules (V) et (VI) et le ou les agents réticulants présents le cas échéant, sans ou avec l'utilisation d'un solvant (selon la revendication 5), en présence de 1 à 100 % molaire de la quantité d'eau qui serait stoechiométriquement nécessaire pour l'hydrolyse complète, pendant un temps de 5 minutes à 72 heures, à une température comprise entre la température ambiante et 200 °C, le cas échéant en ajoutant un catalyseur de condensation, et ensuite après addition d'une quantité supplémentaire d'eau et le cas échéant de solvant supplémentaire, on continue de réaliser le procédé comme à la revendication 4.

**8.** Procédé de fabrication de blocs copolycondensats selon les revendications 1 à 3, caractérisé en ce qu'on précondense les composants monomères de formule (V) et (VI) de la revendication 4, avec la présence le cas échéant du ou des agents réticulants chacun indépendamment l'un de l'autre entre 5 minutes et 72 heures, sans ou avec l'utilisation d'un solvant selon la revendication 5, en présence de 1 à 100 % molaire de la quantité d'eau qui serait chaque fois stoechiométriquement nécessaire à l'hydrolyse complète, entre la température ambiante et 200 °C, le cas échéant en ajoutant un catalyseur de condensation, ensuite on réunit les précondensats et ensuite après addition d'une quantité d'eau supplémentaire et le cas échéant de solvant supplémentaire, on continue de réaliser le procédé comme à la revendication 4.

**9.** Procédé de fabrication de copolycondensats mélangés selon les revendications 1 à 3, caractérisé en ce qu on ne précondense qu'une partie des monomères de formules (V), (VI) et (VIII) à mettre en oeuvre, indépendamment l'un de l'autre le cas échéant entre 5 minutes et 72 heures, sans ou avec l'utilisation d'un solvant (selon la revendication 5), en présence de 1 à 100 % molaire de la quantité d'eau qui serait chaque fois stoechiométriquement nécessaire à l'hydrolyse complète, entre la température ambiante et 200 °C, le cas échéant en ajoutant un catalyseur de condensation, ensuite on réunit le-(s) précondensat(s) avec le(s) composant(s) non précondensé(s) et ensuite après addition d'une quantité d'eau supplémentaire et le cas échéant de solvant supplémentaire, on continue de réaliser le procédé comme à la revendication 4.

**10.** Utilisation des copolycondensats fabriqués d'après l'invention selon les revendications 1 à 3, dans lesquels X représente :

$-NH_2$, $-NH-(CH_2)_2-NH_2$,
$-NH-(CH_2)_2-NH-(CH_2)_2-NH_2$, -SH, $-P(C_6H_5)_2$,

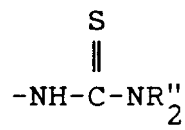

dans lesquels R" a la même signification que dans la revendication 1, pour retenir des métaux dissous à partir de phases aqueuses ou organiques.

**11.** Utilisation de copolycondensats fabriqués d'après l'invention selon les revendications 1 à 3 pour l'adsorption de composés organiques gazeux, de préférence pour l'adsorption de solvants organiques.